# EUROPÄISCHE PATENTSCHRIFT

(11) **EP 4 282 678 B1**
(45) Veröffentlichungstag und Bekanntmachung des Hinweises auf die Patenterteilung: **06.05.2026**
(21) Anmeldenummer: 23165008.6
(22) Anmeldetag: 29.03.2023
(51) Int. Cl.: B60H 1/22

(54) **VERFAHREN ZUM BETREIBEN EINES HYBRID-LUFTHEIZGERÄTS FÜR EIN FAHRZEUG**
METHOD FOR OPERATING A HYBRID AIR HEATER FOR A VEHICLE
PROCÉDÉ DE FONCTIONNEMENT D'UN DISPOSITIF DE CHAUFFAGE D'AIR HYBRIDE POUR UN VÉHICULE

(30) Priorität: 25.05.2022 DE 102022113205
(43) Veröffentlichungstag der Anmeldung: 29.11.2023
(73) Patentinhaber: Eberspächer Climate Control Systems GmbH, 73730 Esslingen (DE)
(72) Erfinder: Eberspach, Günter, Wolfschlugen (DE)
(74) Vertreter: Ruttensperger Lachnit Trossin Gomoll

(56) Entgegenhaltungen:
- EP-A1- 3 269 572
- DE-A1- 102018 006 595
- DE-A1- 102020 203 423
- KR-B1- 101 773 015

## Beschreibung

Die vorliegende Erfindung betrifft ein Verfahren zum Betreiben eines Hybrid-Luftheizgeräts für ein Fahrzeug.

Zur Erwärmung des Fahrzeuginnenraums beispielsweise in einem Personenkraftfahrzeug oder einem Nutzkraftfahrzeug ist es bekannt, vermittels brennstoffbetriebener Fahrzeugheizgeräte das in einem Wärmeträgermediumkreislauf einer Brennkraftmaschine vorhandene, im Allgemeinen flüssige Wärmeträgermedium zu erwärmen und die auf das Wärmeträgermedium übertragene Wärme in einem Wärmetauscher auf in den Fahrzeuginnenraum zu leitende Luft zu übertragen.

Bei einer alternativen Ausgestaltungsform eines zur Erwärmung eines Fahrzeuginnenraums eingesetzten brennstoffbetriebenen Fahrzeugheizgeräts wird die in den Fahrzeuginnenraum einzuleitende Luft direkt an einer Wärmetauscheranordnung des Fahrzeugheizgeräts erwärmt, in welcher die im Verbrennungsbetrieb einer Brenneranordnung des Fahrzeugheizgeräts durch Verbrennung von Luft und Brennstoff generierte Wärme auf die Wärmetauscheranordnung umströmende Heizluft übertragen wird.

Aus der KR 101 773 015 B1 ist ein Hybrid-Luftheizgerät bekannt, bei welchem die erwärmt in einen Fahrzeuginnenraum einzuleitende Luft durch die bei der Verbrennung eines Brennstoffs generierte Wärme einerseits und die bei Erregung einer elektrisch erregbaren Heizeinheit generierte Wärme andererseits erwärmt werden kann. Wird ein Fahrzeug bei niedriger Umgebungstemperatur erwärmt, wird die als Heizluft in einer Wärmetauscheranordnung durch die bei der Verbrennung eines Brennstoffs generierte Wärme zu erwärmende Luft durch die elektrisch erregbare Heizeinheit vorgewärmt. Erreicht die Temperatur des zu erwärmenden Innenraums eine Soll-Temperatur, wird die Erregung der elektrisch erregbaren Heizeinheit beendet.

Es ist die Aufgabe der vorliegenden Erfindung, ein Verfahren zum Betreiben eines Hybrid-Fahrzeugheizgeräts bereitzustellen, mit welchem am Beginn eines Heizbetriebs die in einen Fahrzeuginnenraum einzuleitende Heizluft im Wesentlichen ohne zeitliche Verzögerung erwärmt werden kann und der Schadstoffausstoß im Heizbetrieb verringert werden kann.

Gemäß der vorliegenden Erfindung wird diese Aufgabe gelöst durch ein Verfahren zum Betreiben eines Hybrid-Luftheizgeräts für ein Fahrzeug gemäß Anspruch 1. Das Hybrid-Luftheizgerät umfasst ein von zu erwärmender Heizluft durchströmbares Heizgerätegehäuse mit einem Heizlufteintrittsbereich mit wenigstens einer Heizlufteintrittsöffnung, einem Heizluftaustrittsbereich mit wenigstens einer Heizluftaustrittsöffnung und einem von Heizluft zwischen dem Heizlufteintrittsbereich und dem Heizluftaustrittsbereich durchströmbaren Heizluftströmungsraum in einem von dem Heizgerätegehäuse umgebenen Gehäuseinnenraum. In dem Gehäuseinnenraum sind angeordnet:
- eine mit Brennstoff und Verbrennungsluft zu speisende Brenneranordnung,
- ein Verbrennungsluftgebläse zum Fördern der Verbrennungsluft zu der Brenneranordnung,
- eine Wärmetauscheranordnung zur Übertragung von im Verbrennungsbetrieb in der Brenneranordnung bereitgestellter Wärme auf die Heizluft,
- ein Heizluftgebläse zum Fördern der Heizluft durch den Heizluftströmungsraum,
- eine elektrisch erregbare Heizeinheit zum Erwärmen der den Heizluftströmungsraum durchströmenden Heizluft.

Bei dem für das erfindungsgemäße Verfahren eingesetzten Hybrid-Luftheizgerät stehen grundsätzlich zwei Systembereiche zur Erzeugung von auf die Heizluft zu übertragender Wärme zur Verfügung. Zum einen kann diese Heizluft durch die mit Brennstoff und Verbrennungsluft zu speisende Brenneranordnung mit der im Verbrennungsbetrieb generierten Wärme erwärmt werden. Dies vermeidet insbesondere auch in Hybrid-Fahrzeugen eine insbesondere bei vergleichsweise niedrigen Umgebungstemperaturen starke Belastung der für den elektrischen Fahrbetrieb bzw. allgemein für die Versorgung Verbraucher elektrischer Energie vorgesehenen Batterien und ermöglicht somit das Betreiben des Hybrid-Fahrzeugs im elektromotorischen Antriebszustand mit einer durch den Heizbetrieb im Wesentlichen nicht beeinträchtigten Reichweite.

Das Verfahren zum Betreiben eines derartigen Hybrid-Luftheizgeräts umfasst die Maßnahmen:
a) in einer Startphase eines Verbrennungs-Heizbetriebs des Hybrid-Luftheizgeräts, Fördern von Verbrennungsluft und Brennstoff in die Brenneranordnung zum Starten des Verbrennungsbetriebs der Brenneranordnung,
b) in der Startphase des Verbrennungs-Heizbetriebs des Hybrid-Luftheizgeräts, Betreiben der Heizeinheit,
c) bei Beendigung der Startphase des Verbrennungs-Heizbetriebs des Hybrid-Luftheizgeräts, Beenden des Betreibens der Heizeinheit.

Für einen Übergang in einen Heizbetrieb mit alleinigem Betreiben der Brenneranordnung als Wärmequelle wird die Startphase des Heizbetriebs des Hybrid-Luftheizgeräts eine vorbestimmte Zeitdauer nach Inbetriebnahme der Brenneranordnung oder/und der Heizeinheit beendet oder wird die Startphase des Heizbetriebs des Hybrid-Luftheizgeräts bei Erreichen einer Schwellentemperatur im Bereich des Hybrid-Luftheizgeräts, vorzugsweise im Bereich der Wärmetauscheranordnung, beendet.

Um insbesondere bei vergleichsweise kleiner geforderter Heizleistung ein hinsichtlich des Schadstoffausstoßes nachteilhaftes alternierendes Aktivieren und Deaktivieren der Brenneranordnung zu vermeiden, umfasst das Verfahren zum Betreiben eines derartigen Hybrid-Luftheizgeräts alternativ oder zusätzlich folgende Maßnahmen:
d) bei unter einer Schwellen-Sollheizleistung des Hybrid-Luftheizgeräts liegender Sollheizleistung wird die Heizeinheit betrieben und die Brenneranordnung wird nicht im Verbrennungsbetrieb betrieben, und
e) bei die Schwellen-Sollheizleistung übersteigender oder über der Schwellen-Sollheizleistung liegender Sollheizleistung des Hybrid-Luftheizgeräts wird die Brenneranordnung im Verbrennungsbetrieb betrieben.

Am Beginn des Heizbetriebs kann in einer Phase, in welcher in der Brenneranordnung die Verbrennung sich entwickelt und in der Wärmetauscheranordnung im Wesentlichen noch keine Wärme auf die in den Fahrzeuginnenraum einzuleitende Heizluft übertragen werden kann, durch elektrisches Erregen der Heizeinheit im Wesentlichen ohne zeitliche Verzögerung die das Heizgerätegehäuse durchströmende Heizluft Wärme aufnehmen und in den zu erwärmenden Innenraum eintragen. Die dafür benötigte elektrische Energie ist aufgrund des Umstandes, dass diese Phase des Beginns des Heizbetrieb zeitlich begrenzt ist und im Allgemeinen bis zur ausreichenden Erwärmung der Wärmetauscheranordnung nur wenige Minuten erforderlich sind, begrenzt und beeinträchtigt die Reichweite eines Hybrid-Fahrzeugs im elektromotorischen Antriebszustand im Wesentlichen nicht.

Für einen kompakten Aufbau des erfindungsgemäßen Hybrid-Luftheizgeräts wird vorgeschlagen, dass das Verbrennungsluftgebläse ein durch einen Gebläsemotor zur Drehung antreibbares Verbrennungsluftförderrad umfasst, und dass das Heizluftgebläse ein durch den Gebläsemotor zur Drehung antreibbares Heizluftförderrad umfasst. Die beiden Förderräder werden somit durch einen einzigen, im Allgemeinen zwischen diesen angeordneten und durch elektrische Erregung betriebenen Gebläsemotor zur Drehung angetrieben. Dies bedeutet, dass auch in einer Phase zu Beginn des Heizbetrieb, in welcher nicht nur das Verbrennungsluftförderrad zum Fördern von Verbrennungsluft in die Brenneranordnung zur Drehung angetrieben wird, sondern auch das Heizluftförderrad zum Fördern von Heizluft durch den Heizluftströmungsraum in dem Gebläsegehäuse angetrieben wird, ein Zustand, in welchem aufgrund noch nicht einsetzender Erwärmung der Heizluft an der Wärmetauscheranordnung vergleichsweise kalte Heizluft in einen Fahrzeuginnenraum eingeleitet wird, durch die gleichzeitige Erregung der Heizeinheit und die Erwärmung der Heizluft an der Heizeinheit vermieden werden kann.

Für eine effiziente Förderung insbesondere der Heizluft durch den Heizluftströmungsraum wird vorgeschlagen, dass das Heizluftförderrad und das Verbrennungsluftförderrad im Gehäuseinnenraum stromaufwärts bezüglich der Brenneranordnung oder/und der Wärmetauscheranordnung angeordnet sind.

Bei einer besonders vorteilhaften Ausgestaltung kann die Heizeinheit stromabwärts bezüglich der Brenneranordnung oder/und der Wärmetauscheranordnung angeordnet sein. Dies bedeutet, dass die durch die Heizeinheit erwärmte Heizluft keine insbesondere am Beginn des Heizbetriebs vergleichsweise kalte Komponenten, wie zum Beispiel ein Brennkammergehäuse der Brenneranordnung oder ein im Allgemeinen mit Wärmeübertragungsrippen ausgebildetes Gehäuse der Wärmetauscheranordnung, umströmt, sondern erst nach Umströmung dieser Komponenten die Heizluft in Wechselwirkung mit der Heizeinheit tritt, Wärme aufnimmt und diese im Wesentlichen auch ohne Wärmeverluste im Luftheizgerät selbst in Richtung zu dem Fahrzeuginnenraum transportiert.

Beispielsweise kann hierzu vorgesehen sein, dass die Heizeinheit in Richtung einer Gehäuselängsachse zwischen der Wärmetauscheranordnung und dem Heizluftaustrittsbereich angeordnet ist, so dass insbesondere stromabwärts der Heizeinheit im Wesentlichen keine der an der Heizeinheit erwärmten Heizluft Wärme entziehenden Systembereiche des Luftheizgeräts selbst vorhanden sind.

Für einen effizienten Heizbetrieb kann die Heizeinheit eine Mehrzahl von PTC-Heizelementen umfassen.

Es ist darauf hinzuweisen, dass ein derartiger Verbrennungs-Heizbetrieb des Hybrid-Luftheizgeräts unmittelbar dann gestartet werden kann, wenn das Hybrid-Luftheizgerät zum Erwärmen der in den Fahrzeuginnenraum einzuleitenden Luft in Betrieb genommen werden soll. Grundsätzlich kann ein derartiger Verbrennungs-Heizbetrieb aber auch erst dann gestartet werden, wenn nach Betreiben des Hybrid-Luftheizgeräts ausschließlich mit erregter Heizeinheit zum Erwärmen der in den Fahrzeuginnenraum einzuleitenden Luft beispielsweise eine größere, von der Heizeinheit nicht bereitstellbare Heizleistung gefordert wird. Bei diesem Verfahren kann im Heizbetrieb des Hybrid-Luftheizgeräts Heizluft durch den Heizluftströmungsraum gefördert werden, oder/und kann Verbrennungsluft zu der Brenneranordnung gefördert werden.

Soll nach alleinigem Betreiben der Heizeinheit beispielsweise aufgrund einer größeren geforderten Heizleistung die Brenneranordnung im Betrieb genommen werden, wird vorgeschlagen, dass bei die Schwellen-Sollheizleistung übersteigender Sollheizleistung des Hybrid-Luftheizgeräts der Verbrennungs-Heizbetrieb des Hybrid-Luftheizgeräts mit den Maßnahmen a) bis c) gestartet wird.

Beispielsweise kann die Schwellen-Sollheizleistung im Bereich einer maximalen Heizleistung der Heizeinheit liegen oder/und kann die Schwellen-Sollheizleistung größer oder gleich einer minimalen Verbrennungs-Heizleistung des Hybrid-Luftheizgeräts im Verbrennungs-Heizbetrieb sein. Es ist in diesem Zusammenhang darauf hinzuweisen, dass im Sinne der vorliegenden Erfindung die minimale Verbrennungs-Heizleistung des Hybrid-Luftheizgeräts diejenige minimale Heizleistung ist, welche das Hybrid- Luftheizgerät im Dauer-Verbrennungsbetrieb, also ohne alternierendes Aktivieren und Deaktivieren der Brenneranordnung, bereitstellen kann. Auf diese Art und Weise kann gewährleistet werden, dass keine Lücke entsteht zwischen der durch die Heizeinheit maximal bereitstellbaren Heizleistung einerseits und der durch die Brenneranordnung bereitstellbaren minimalen Heizleistung andererseits, so dass ein Heizbetrieb vermieden werden kann, bei welchem aufgrund der geforderten Heizleistung ein alleiniges Betreiben der Heizeinheit nicht ausreicht, andererseits jedoch die Brenneranordnung alternierend aktiviert und deaktiviert werden müsste, um nicht eine über der Sollheizleistung liegende Verbrennungs-Heizleistung zu generieren.

Die vorliegende Erfindung wird nachfolgend mit Bezug auf die beiliegenden Figuren detailliert beschrieben. Es zeigt:
Fig. 1 in prinzipartiger Darstellung ein Hybrid-Luftheizgerät im Längsschnitt;
Fig. 2 in den Darstellungen a) bis c) eine Vorgehensweise bei der Inbetriebnahme des in Fig. 1 dargestellten Hybrid-Luftheizgeräts.

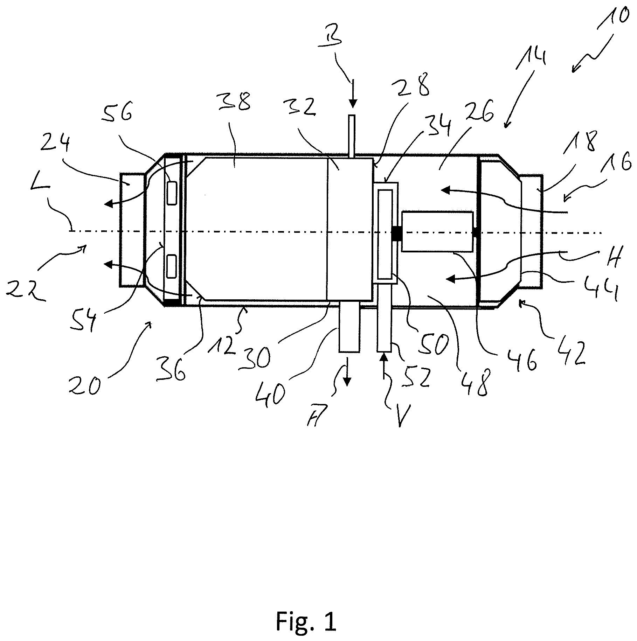

In Fig. 1 ist ein Hybrid-Luftheizgerät für ein Fahrzeug allgemein mit 10 bezeichnet. Das Hybrid-Luftheizgerät 10 umfasst ein in Richtung einer Gehäuselängsachse L langgestrecktes, im Wesentlichen rohrartiges Heizgerätegehäuse 12. In einem stromaufwärtigen Endbereich 14 weist das Heizgerätegehäuse 12 einen Heizlufteintrittsbereich 16 mit wenigstens einer Heizlufteintrittsöffnung 18 auf. In einem stromabwärtigen Endbereich 20 weist das Heizgerätegehäuse 2 einen Heizluftaustrittsbereich 22 mit wenigstens einer Heizluftaustrittsöffnung 24 auf.

In einem von dem Heizgerätegehäuse 12 umgebenen Gehäuseinnenraum 26 ist eine allgemein mit 28 bezeichnete Brenneranordnung vorgesehen. Diese umfasst eine von einem Brennkammergehäuse 30 umgebene Brennkammer 32, in welche vermittels eines Verbrennungsluftgebläses 34 Verbrennungsluft V eingespeist wird. Über eine nicht dargestellte Brennstoffpumpe, beispielsweise Dosierpumpe, wird Brennstoff B in die Brennkammer 32 eingespeist und zusammen mit der Verbrennungsluft V im Verbrennungsbetrieb verbrannt.

Eine an die Brenneranordnung 28 angrenzende Wärmetauscheranordnung 36 weist ein Wärmetauschergehäuse 38 auf. Das Wärmetauschergehäuse 38 der Wärmetauscheranordnung 36 nimmt im Verbrennungsbetrieb vom dieses durchströmendem Abgas A Wärme auf. Das Abgas A verlässt das Hybrid-Luftheizgerät 10 nach dem Durchströmen der Wärmetauscheranordnung 36 im Bereich eines Abgasauslasses 40.

Ein allgemein mit 42 bezeichnetes Heizluftgebläse umfasst ein im Bereich des Heizlufteintrittsbereichs 16 positioniertes Heizluftförderrad 44. Dieses kann durch einen Gebläsemotor 46 zur Drehung beispielsweise um die Gehäuselängsachse L angetrieben werden und fördert dabei Heizluft H durch den Heizlufteintrittsbereich 16 bzw. die Heizlufteintrittsöffnung 18 desselben und einen im Gehäuseinnenraum 26 gebildeten Heizluftströmungsraum 48 in Richtung zur Wärmetauscheranordnung 36. An der Wärmetauscheranordnung 36 kann die den Heizluftströmungsraum 48 durchströmende Heizluft H im Heizbetrieb der Brenneranordnung 28 generierte Wärme aufnehmen und im Bereich der Heizluftaustrittsöffnung 24 des Heizluftaustrittsbereichs 22 in Richtung zu dem zu erwärmenden Innenraum aus dem Hybrid-Luftheizgerät 10 austreten.

Das Verbrennungsluftgebläse 34 umfasst ein Verbrennungsluftförderrad 50, welches die im Bereich eines Verbrennungslufteintritts 52 aufgenommene Verbrennungsluft V in die Brennkammer 32 der Brenneranordnung 28 speist. Auch das Verbrennungsluftförderrad 50 kann durch den Gebläsemotor 46 zur Drehung beispielsweise um die Gehäuselängsachse L angetrieben werden, so dass im Betrieb des im Allgemeinen als Elektromotor ausgebildeten Gebläsemotors 46 das Heizluftförderrad 44 und das Verbrennungsluftförderrad 50 um die gleiche Drehachse und mit der gleichen Drehzahl rotieren und Heizluft H in den Heizluftströmungsraum 48 und Verbrennungsluft V in die Brennkammer 32 fördern.

Das Heizluftgebläse 42 mit seinem Heizluftförderrad 44 und das Verbrennungsluftgebläse 34 mit seinem Verbrennungsluftförderrad 50 sind in einem stromaufwärtigen Bereich des Gehäuseinnenraums 26 stromaufwärts der Brenneranordnung 28 und auch der Wärmetauscheranordnung 36 angeordnet. Somit umströmt die durch das Heizluftförderrad 44 in dem Gehäuseinnenraum 26 geförderte Heizluft H im Wesentlichen alle im Verbrennungsbetrieb der Brenneranordnung 28 erwärmten und Wärme nach außen abgebenden Systembereiche.

Im Heizgerätegehäuse 12 ist ferner vorzugsweise stromabwärts bezüglich der Wärmetauscheranordnung 36 und somit auch der Brenneranordnung 28 eine allgemein mit 54 bezeichnete, elektrisch erregbare Heizeinheit vorgesehen. Diese kann beispielsweise ein PTC-Heizer mit einer Mehrzahl von bei Anlegen einer elektrischen Spannung Wärme erzeugenden bzw. abgebenden PTC-Heizelementen 56 sein. Die Heizeinheit 54 ist im stromabwärtigen Endbereich 20 des Heizgerätegehäuses 12 im Wesentlichen unmittelbar stromaufwärts der Heizluftaustrittsöffnung 24 angeordnet, so dass, mit Ausnahme des in diesem Bereich sich noch erstreckenden Abschnitts des Heizgerätegehäuses 12, zwischen der Heizluftaustrittsöffnung 24 und der Heizeinheit 54 im Wesentlichen keine weiteren Systembereiche des Hybrid-Luftheizgeräts 10 liegen.

Im Heizbetrieb des Hybrid-Luftheizgeräts 10 kann insbesondere am Beginn des Heizbetriebs begonnen werden, Verbrennungsluft V und Brennstoff B in die Brennkammer 32 zu speisen, um dort ein zündfähiges Gemisch zu erzeugen. Hierzu wird der Gebläsemotor 46 in Betrieb gesetzt, was zur Folge hat, dass nicht nur das Verbrennungsluftförderrad 50 Verbrennungsluft V in die Brennkammer 32 speist, sondern auch das Heizluftförderrad 44 Heizluft H durch den Heizluftströmungsraum 48 und somit auch entlang der Wärmetauscheranordnung 36 fördert. Da zu Beginn des Heizbetriebs bzw. des Verbrennungsbetriebs der Brenneranordnung 28 die verschiedenen Systembereiche des Hybrid-Luftheizgeräts 10 im Allgemeinen die gleiche Temperatur haben werden, wie die Umgebungsluft, würde in diesem Zustand die im Wesentlichen nicht erwärmte, vergleichsweise kalte, im Allgemeinen der Umgebung entzogene Heizluft H in Richtung zu dem Fahrzeuginnenraum gefördert werden.

Um dies zu vermeiden, kann insbesondere in dieser Startphase am Beginn des Heizbetriebs die Heizeinheit 54 durch Anlegen einer elektrischen Spannung aus dem Bordspannungssystem eines Fahrzeugs betrieben werden, so dass die durch den Heizluftströmungsraum 48 strömende Heizluft an der Heizeinheit 54 erwärmt wird und in diesem erwärmten Zustand im Heizluftaustrittsbereich 24 aus dem Heizgerätegehäuse 12 austritt.

Hat die Wärmetauscheranordnung 36 nach dem Beginn des Verbrennungsbetriebs in der Brenneranordnung 28 eine ausreichende Temperatur erreicht, kann die Heizluft H im Wesentlichen alleine von dieser erwärmt werden, so dass das Erregen der Heizeinheit 54 beendet werden kann und somit eine weitere Belastung des Bordspannungssystems eines Fahrzeugs durch die Heizeinheit 54 vermieden wird. Dies hat zur Folge, dass die im Bordspannungssystem zur Verfügung stehende elektrische Energie beispielsweise in einem Hybrid-Fahrzeug im Wesentlichen vollständig für den elektrischen Antriebszustand genutzt werden kann. Bei vergleichsweise niedrigen Umgebungstemperaturen kann gleichwohl auch während des Betriebs der Brenneranordnung 28 die Heizeinheit 54 erregt werden, um sicherzustellen, dass ein Fahrzeuginnenraum ausreichend schnell und insbesondere auch in ausreichendem Ausmaß erwärmt und warm gehalten werden kann.

Der Übergang von einem Heizbetrieb mit gleichzeitigem Betreiben der Brenneranordnung 28 und der Heizeinheit 24 zu einem Heizbetrieb mit ausschließlichem Betrieb der Brenneranordnung 28 kann beispielsweise eine vorbestimmte Zeitdauer, beispielsweise einige Minuten, ab dem Beginn des Verbrennungsbetriebs der Brenneranordnung 28 erfolgen. Alternativ oder zusätzlich ist es möglich, in Zuordnung beispielsweise zu der Wärmetauscheranordnung 36 einen Temperatursensor vorzusehen, welcher die Temperatur im Bereich der Wärmetauscheranordnung 36 erfassen kann. Ein derartiger beispielsweise an der Außenseite der Wärmetauscheranordnung 36 angebrachter Temperatursensor kann auch als Flammfühler genutzt werden und erzeugt ein Temperatursignal, welches die Temperatur der Wärmetauscheranordnung 36 insbesondere an der Außenseite derselben wiedergibt. Hat die Wärmetauscheranordnung 36 einen für die ausreichende Erwärmung der Heizluft H vorgegebenen Schwellenwert erreicht, kann dies als Auslöser für das Beenden des Heizbetriebs der Heizeinheit 54 genutzt werden, so dass mit dem Beenden der Startphase ein unnötiger Energieverbrauch durch Belastung des Bordspannungssystems bzw. der Batterie eines Fahrzeugs vermieden wird. Steht im Bordspannungssystem ausreichend Energie zur Verfügung, kann grundsätzlich auch die Heizeinheit 54 als einzige Energiequelle betrieben werden, wodurch der Schadstoffausstoß gesenkt werden kann.

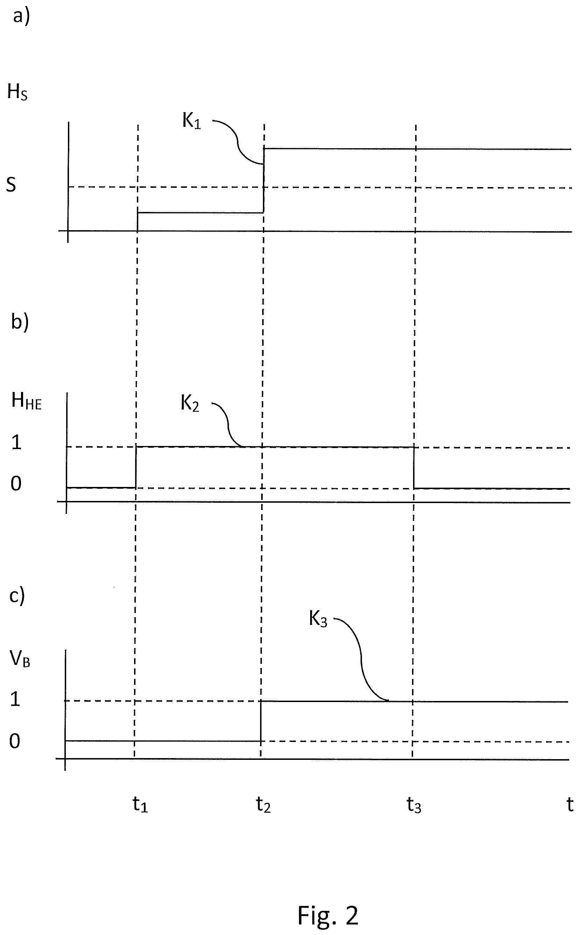

Eine auch mit der vorangehend beschriebenen Vorgehensweise kombinierbaren alternative Vorgehensweise zum Betreiben des Hybrid-Luftheizgeräts 10 ist in Fig.2 veranschaulicht.

Bei dieser Vorgehensweise wird zu einem Zeitpunkt t₁ das Hybrid-Luftheizgerät 10 zur Erwärmung der in einen Fahrzeuginnenraum einzuleitenden Luft in Betrieb gesetzt. Die vom Hybrid-Luftheizgerät 10 zu diesem Zeitpunkt bzw. in dieser Betriebsphase geforderte, durch die Kurve K₁ repräsentierte Soll-Heizleistung Hs liegt unter einer in der Darstellung a) der Fig. 2 erkennbaren Schwellen-Sollheizleistung S. Diese kann beispielsweise so gewählt sein, dass sie im Bereich der maximalen Heizleistung der Heizeinheit 54 liegt, also derjenigen Heizleistung, welche diese maximal bereitzustellen in der Lage ist. Beispielsweise kann die Schwellen-Sollheizleistung S auch so gewählt sein, dass sie größer ist, als die kleinste von der Brenneranordnung 28 im Dauer-Verbrennungs-Heizbetrieb der Hybrid-Luftheizung stabil bereitstellbare Verbrennungs-Heizleistung.

Solange die Soll-Heizleistung Hs kleiner ist als die Schwellen-Sollheizleistung S, wird nur die Heizeinheit 54 zum Erwärmen der in den Fahrzeuginnenraum einzuleitenden Heizluft betrieben. Die Brennanordnung 28 ist bzw. bleibt deaktiviert. In dieser Betriebsphase bzw. in diesem Betriebszustand wird unvermeidbar auch das Verbrennungsluftförderrad 50 des Verbrennungsluftgebläses 34 durch den einzigen Gebläsemotor 46, der auch das Heizluftförderrad 44 zum Fördern der Heizluft H antreibt, zur Drehung angetrieben. Da die Brenneranordnung 28 jedoch deaktiviert bleiben soll, wird kein Brennstoff B in diese eingespeist und ein in dieser vorhandenes Zündorgan wird nicht zum Starten der Verbrennung aktiviert.

Die Darstellung b) der Fig. 2 veranschaulicht anhand der Kurve K₂, dass ab dem Zeitpunkt t₁ ein Heizbetrieb H_{HE} der Heizeinheit 54 aktiviert wird, d. h. von einem Status 0 auf einen Status 1 geht, wobei in diesem Heizbetrieb die Heizeinheit 54 mit einer der geforderten Heizleistung, also der Sollheizleistung Hs, entsprechenden Heizleistung betrieben werden kann.

Wie anhand der Kurve K₁ in der Darstellung a) der Fig. 2 veranschaulicht, übersteigt zu einem Zeitpunkt t₂ die Sollheizleistung Hs die Schwellen-Sollheizleistung S. Ist diese Schwellen-Sollheizleistung S beispielsweise so gesetzt, dass diese im Bereich der maximalen Heizleistung der Heizeinheit 54 liegt, bedeutet dies, dass ab dem Zeitpunkt t₂ die Heizeinheit 54 nicht mehr dazu in der Lage ist, die Heizluft H in dem geforderten Ausmaß zu erwärmen. Es wird daher zum Zeitpunkt t₂ der Verbrennungsbetrieb der Brenneranordnung 28 gestartet, so dass das Hybrid-Luftheizgerät 10 in seinen Verbrennungs-Heizbetrieb übergeht.

Da auch in diesem Zustand zunächst die Brenneranordnung 28 vergleichsweise kalt ist und insbesondere nicht dazu in der Lage ist, die Heizluft H im Bereich der Wärmetauscheranordnung 36 zu erwärmen, wird, wie in der Darstellung b) der Fig. 2 anhand der Kurve K₂ veranschaulicht, die Heizeinheit 54 weiter betrieben, beispielsweise mit der zuvor eingestellten Heizleistung oder, sofern diese nicht der maximalen Heizleistung derselben entsprochen hat, einer auf die maximale Heizleistung angehobenen Heizleistung.

Zum Zeitpunkt t₂ wird auch der Verbrennungsbetrieb der Brenneranordnung 28 gestartet, und zwar dadurch, dass bei bereits betriebenem Verbrennungsluftfördergebläse 34 nunmehr auch Brennstoff B in die Brenneranordnung 28 eingespeist wird. Dies ist in der Darstellung c) anhand der Kurve K₃ dadurch veranschaulicht, dass ein Verbrennungsbetrieb V_{B} der Brenneranordnung 28 aktiviert wird, also auf den Status 1 gesetzt wird. Da mit dem Starten des Verbrennungsbetriebs der Brenneranordnung 28, also auch des Verbrennungs-Heizbetriebs des Hybrid-Luftheizgeräts 10, zunächst Brennstoff B in die Brenneranordnung 28 gespeist wird und erst mit einer zeitlichen Verzögerung ein verbrennungsfähiges Gemisch aus Verbrennungsluft V und Brennstoff B in der Brenneranordnung 28 zur Verfügung steht, wird auch nach dem Zeitpunkt t₂ die Heizeinheit 54 weiter betrieben, um zunächst noch durch diese die Heizluft H erwärmen zu können. Erst dann, wenn nach dem Zünden des in der Brenneranordnung 28 vorhandenen Gemisches aus Verbrennungsluft V und Brennstoff B die Verbrennung zwischen den Zeitpunkten t₂ und t₃ gestartet wurde und auch die Wärmetauscheranordnung 28 derart erwärmt ist, dass die Heizluft H an der Wärmetauscheranordnung 36 erwärmt werden kann, wird zum Zeitpunkt t₃ die Heizanordnung 54 deaktiviert, also der Heizbetrieb derselben auf den Status 0 gesetzt. Das Hybrid-Luftheizgerät 10 wird dann im Verbrennungs-Heizbetrieb betrieben, um die Heizluft H auch mit vergleichsweise großer Heizleistung erwärmen zu können.

Mit der in Fig. 2 veranschaulichten Prozedur kann vermieden werden, dass insbesondere bei vergleichsweise geringer geforderter Heizleistung, welche in einem Dauerbetrieb der Brenneranordnung 28 nicht bereitgestellt werden kann, die Brenneranordnung 28 alternierend aus- und eingeschaltet werden muss, wodurch ein bei derartigen Aus- und Einschaltvorgängen auftretender vergleichsweise hoher Schadstoffausstoß vermieden werden kann. Wird nach derartiger beispielsweise am Beginn des Heizbetriebs des Hybrid-Luftheizgeräts 10 liegender Phase mit vergleichsweise geringer geforderter Heizleistung eine größere Heizleistung gefordert, so dass das Starten des Verbrennungsbetriebs der Brenneranordnung 28 erforderlich ist, kann diese in einer Art und Weise unter weiterhin betriebener Heizeinheit 54 in Betrieb genommen werden, wie dies auch dann vorteilhaft ist, wenn bereits bei Inbetriebnahme des Hybrid-Luftheizgeräts 10 der Verbrennungsbetrieb der Brenneranordnung 28 gestartet werden soll, zunächst aber, begleitend zum Starten des Verbrennungsbetriebs, auch die Heizeinheit 54 zum Erwärmen der Heizluft H aktiviert wird.

Auch dann, wenn bereits nach längerem Betrieb des Hybrid-Luftheizgeräts 10 in einen Betriebszustand mit vergleichsweise geringer geforderter Heizleistung, also Sollheizleistung, übergegangen wird und diese Heizleistung alleine durch die Heizeinheit 54 bereitgestellt werden kann, kann die Brenneranordnung 28 beispielsweise deaktiviert werden und die Heizluft H wieder ausschließlich durch die Heizeinheit 54 erwärmt werden. Soll dann, beispielsweise aufgrund erneut geforderter höherer Heizleistung, die Brenneranordnung 28 wieder in Betrieb genommen werden, kann so wie vorangehend beschrieben und in Fig. 2 dargestellt vorgegangen werden, wobei aufgrund des Umstandes, dass möglicherweise die verschiedenen Komponenten der Brenneranordnung 28 und insbesondere die Wärmetauscheranordnung 36 noch eine vergleichsweise hohe Temperatur aufweisen, die Zeitdauer zwischen den Zeitpunkten t₂ und t₃ vergleichsweise kurz sein kann, da ohne wesentliche Verzögerung nach dem Starten des Verbrennungsbetriebs der Brenneranordnung 28 die Wärmetauscheranordnung 36 bereits eine ausreichend hohe Temperatur aufweisen wird. Hierzu kann es vorteilhaft sein, die Zeitdauer zwischen den Zeitpunkten t₂ und t₃, also zwischen dem Starten des Verbrennungs-Heizbetriebs und dem Beenden des Betriebs der Heizeinheit 54, nicht durch eine fest vorgegebene Zeitdauer zu definieren, sondern auf der Grundlage der Temperatur beispielsweise der Wärmetauscheranordnung 36 festzulegen.

## Patentansprüche

1. Verfahren zum Betreiben eines Hybrid-Luftheizgeräts (10) für ein Fahrzeug, das Hybrid-Luftheizgerät (10) umfassend ein von zu erwärmender Heizluft (H) durchströmbares Heizgerätegehäuse (12) mit einem Heizlufteintrittsbereich (14) mit wenigstens einer Heizlufteintrittsöffnung (16), einem Heizluftaustrittsbereich (22) mit wenigstens einer Heizluftaustrittsöffnung (24) und einem von Heizluft (H) zwischen dem Heizlufteintrittsbereich (14) und dem Heizluftaustrittsbereich (22) durchströmbaren Heizluftströmungsraum (48) in einem von dem Heizgerätegehäuse (12) umgebenen Gehäuseinnenraum (26), wobei in dem Gehäuseinnenraum (26) angeordnet sind:
- eine mit Brennstoff (B) und Verbrennungsluft (V) zu speisende Brenneranordnung (28),
- ein Verbrennungsluftgebläse (34) zum Fördern der Verbrennungsluft (V) zu der Brenneranordnung (28),
- eine Wärmetauscheranordnung (36) zur Übertragung von im Verbrennungsbetrieb in der Brenneranordnung (28) bereitgestellter Wärme auf die Heizluft (H),
- ein Heizluftgebläse (42) zum Fördern der Heizluft (H) durch den Heizluftströmungsraum (48),
- eine elektrisch erregbare Heizeinheit (54) zum Erwärmen der den Heizluftströmungsraum (48) durchströmenden Heizluft (H),
**dadurch gekennzeichnet, dass** das Verfahren folgende Maßnahmen a)-c) umfasst:
a) in einer Startphase eines Verbrennungs-Heizbetriebs des Hybrid-Luftheizgeräts (10), Fördern von Verbrennungsluft (V) und Brennstoff (B) in die Brenneranordnung (28) zum Starten des Verbrennungsbetriebs der Brenneranordnung (28),
b) in der Startphase des Verbrennungs-Heizbetriebs des Hybrid-Luftheizgeräts (10), Betreiben der Heizeinheit (54),
c) bei Beendigung der Startphase des Verbrennungs-Heizbetriebs des Hybrid- Luftheizgeräts (10) eine vorbestimmte Zeitdauer nach Inbetriebnahme der Brenneranordnung (28) oder/und der Heizeinheit (54) oder bei Erreichen einer Schwellentemperatur im Bereich des Hybrid-Luftheizgeräts (10), Beenden des Betreibens der Heizeinheit (54),
oder/und dass das Verfahren folgende Maßnahmen d) und e) umfasst:
d) bei unterer einer Schwellen-Sollheizleistung (S) des Hybrid-Luftheizgeräts (10) liegender Sollheizleistung (HS) wird die Heizeinheit (54) betrieben und die Brenneranordnung (28) wird nicht im Verbrennungsbetrieb betrieben,
e) bei die Schwellen-Sollheizleistung (S) übersteigender oder über der Schwellen-Sollheizleistung (S) liegender Sollheizleistung (HS) des Hybrid-Luftheizgeräts (10) wird die Brenneranordnung (28) im Verbrennungsbetrieb betrieben.

2. Verfahren nach Anspruch 1, **dadurch gekennzeichnet, dass** das Verbrennungsluftgebläse (34) ein durch einen Gebläsemotor (46) zur Drehung antreibbares Verbrennungsluftförderrad (50) umfasst, und dass das Heizluftgebläse (42) ein durch den Gebläsemotor (46) zur Drehung antreibbares Heizluftförderrad (44) umfasst.

3. Verfahren nach Anspruch 2, **dadurch gekennzeichnet, dass** das Heizluftförderrad (44) und das Verbrennungsluftförderrad (50) im Gehäuseinnenraum (26) stromaufwärts bezüglich der Brenneranordnung (28) oder/und der Wärmetauscheranordnung (36) angeordnet sind.

4. Verfahren nach einem der Ansprüche 1-3, **dadurch gekennzeichnet, dass** die Heizeinheit (54) stromabwärts bezüglich der Brenneranordnung (28) oder/und der Wärmetauscheranordnung (36) angeordnet ist.

5. Verfahren nach Anspruch 4, **dadurch gekennzeichnet, dass** die Heizeinheit (54) in Richtung einer Gehäuselängsachse (L) zwischen der Wärmetauscheranordnung (36) und dem Heizluftaustrittsbereich (22) angeordnet ist.

6. Verfahren nach einem der Ansprüche 1-5, **dadurch gekennzeichnet, dass** die Heizeinheit (54) eine Mehrzahl von PTC-Heizelementen (56) umfasst.

7. Verfahren nach einem der Ansprüche 1-6, **dadurch gekennzeichnet, dass** im Verbrennungs-Heizbetrieb des Hybrid-Luftheizgeräts (10) Heizluft (H) durch den Heizluftströmungsraum (58) gefördert wird oder/und Verbrennungsluft (V) zu der Brenneranordnung (28) gefördert wird.

8. Verfahren nach einem der Ansprüche 1-7, **dadurch gekennzeichnet, dass** die Startphase des Verbrennungs-Heizbetriebs des Hybrid-Luftheizgeräts (10) bei Erreichen einer Schwellentemperatur im Bereich der Wärmetauscheranordnung (36) beendet wird.

9. Verfahren nach einem der Ansprüche 1-8, **dadurch gekennzeichnet, dass** bei die Schwellen-Sollheizleistung (S) übersteigender Sollheizleistung (Hs) des Hybrid-Luftheizgeräts (10) der Verbrennungs-Heizbetrieb des Hybrid-Luftheizgeräts (10) mit den Maßnahmen a) bis c) gestartet wird.

10. Verfahren nach einem der Ansprüche 1-9, **dadurch gekennzeichnet, dass** die Schwellen-Sollheizleistung (S) im Bereich einer maximalen Heizleistung der Heizeinheit (54) liegt oder/und dass die Schwellen-Sollheizleistung (S) größer oder gleich einer minimalen Verbrennungs-Heizleistung des Hybrid-Luftheizgeräts (10) im Verbrennungs-Heizbetrieb ist.

## Claims

1. A method for operating a hybrid air heater (10) for a vehicle, the hybrid air heater (10) comprising a heater housing (12) through which heating air (H) to be heated can flow, having a heating air inlet region (14) with at least one heating air inlet opening (16), a heating air outlet region (22) with at least one heating air outlet opening (24) and a heating air flow chamber (48) through which heating air (H) can flow between the heating air inlet region (14) and the heating air outlet region (22) within a housing interior (26) surrounded by the heater housing (12), wherein the following are arranged in the housing interior (26):
- a burner assembly (28) to be supplied with fuel (B) and combustion air (V),
- a combustion air blower (34) for conveying the combustion air (V) to the burner assembly (28),
- a heat exchanger assembly (36) for transferring heat generated during combustion in the burner assembly (28) to the heating air (H),
- a heating air blower (42) for conveying the heating air (H) through the heating air flow chamber (48),
- an electrically energisable heating unit (54) for heating the heating air (H) flowing through the heating air flow chamber (48),
**characterised in that** the method comprises the following steps a)-c):
a) during a start phase of a combustion heating operation of the hybrid air heater (10), conveying combustion air (V) and fuel (B) into the burner assembly (28) to start the combustion operation of the burner assembly (28),
b) during the start phase of the combustion heating operation of the hybrid air heater (10), operating the heating unit (54),
c) upon completion of the start phase of the combustion heating operation of the hybrid air heater (10), a predetermined period of time after the burner assembly (28) and/or the heating unit (54) has been started, or upon reaching a threshold temperature within the hybrid air heater (10), terminating the operation of the heating unit (54),
and/or that
the method comprises the following steps d) and e):
d) if the setpoint heating output (HS) is below a threshold setpoint heating output (S) of the hybrid air heater (10), the heating unit (54) is operated and the burner assembly (28) is not operated in combustion mode,
e) if the setpoint heating power (HS) exceeds or is above the threshold setpoint heating power (S) of the hybrid air heater (10), the burner assembly (28) is operated in combustion mode.

2. The method according to claim 1, **characterised in that** the combustion air blower (34) comprises a combustion air impeller (50) drivable in rotation by a blower motor (46), and **in that** the heating air blower (42) comprises a heating air impeller (44) drivable in rotation by the blower motor (46).

3. The method according to claim 2, **characterised in that** the heating air impeller (44) and the combustion air impeller (50) are arranged within the housing interior (26) upstream of the burner assembly (28) and/or the heat exchanger assembly (36).

4. The method according to any one of claims 1-3, **characterised in that** the heating unit (54) is arranged downstream of the burner assembly (28) and/or the heat exchanger assembly (36).

5. The method according to claim 4, **characterised in that** the heating unit (54) is arranged in the direction of a housing longitudinal axis (L) between the heat exchanger assembly (36) and the heating air outlet region (22).

6. The method according to any one of claims 1-5, **characterised in that** the heating unit (54) comprises a plurality of PTC heating elements (56).

7. The method according to any one of claims 1 to 6, **characterised in that**, during combustion heating operation of the hybrid air heater (10), heated air (H) is conveyed through the heated air flow chamber (58) and/or combustion air (V) is conveyed to the burner assembly (28).

8. The method according to any one of claims 1 to 7, **characterised in that** the start phase of the combustion heating mode of the hybrid air heater (10) is terminated upon reaching a threshold temperature in the region of the heat exchanger assembly (36).

9. The method according to any one of claims 1-8, **characterised in that**, when the setpoint heating output (HS) of the hybrid air heater (10) exceeds the threshold setpoint heating output (S), the combustion heating operation of the hybrid air heater (10) is started by means of steps a) to c).

10. The method according to any one of claims 1 to 9, **characterised in that** the threshold setpoint heating output (S) lies within the range of a maximum heating output of the heating unit (54) and/or that the threshold setpoint heating output (S) is greater than or equal to a minimum combustion heating output of the hybrid air heater (10) in combustion heating mode.

## Revendications

1. Un procédé de fonctionnement d'un réchauffeur d'air hybride (10) pour un véhicule, le réchauffeur d'air hybride (10) comprenant un boîtier de réchauffeur (12) à travers lequel peut s'écouler l'air de chauffage (H), comportant une zone d'entrée d'air de chauffage (14) avec au moins une ouverture d'entrée d'air de chauffage (16), une zone de sortie d'air de chauffage (22) comportant au moins une ouverture de sortie d'air de chauffage (24) et une chambre d'écoulement d'air de chauffage (48) à travers laquelle l'air de chauffage (H) peut s'écouler entre la zone d'entrée d'air de chauffage (14) et la zone de sortie d'air de chauffage (22) à l'intérieur d'un espace intérieur (26) entouré par le boîtier de réchauffeur (12), dans lequel sont disposés à l'intérieur du boîtier (26) :
- un ensemble de brûleur (28) destiné à être alimenté en combustible (B) et en air de combustion (V),
- un ventilateur d'air de combustion (34) destiné à acheminer l'air de combustion (V) vers l'ensemble de brûleur (28),
- un ensemble d'échangeur de chaleur (36) destiné à transférer la chaleur générée lors de la combustion dans l'ensemble de brûleur (28) vers l'air de chauffage (H),
- un ventilateur d'air de chauffage (42) destiné à acheminer l'air de chauffage (H) à travers la chambre d'écoulement d'air de chauffage (48),
- une unité de chauffage (54) pouvant être excitée électriquement pour chauffer l'air de chauffage (H) circulant à travers la chambre d'écoulement d'air de chauffage (48),
**caractérisé en ce que** le procédé comprend les étapes a) à c) suivantes :
a) pendant une phase de démarrage du fonctionnement de chauffage par combustion du réchauffeur d'air hybride (10), acheminer de l'air de combustion (V) et du combustible (B) dans l'ensemble de brûleur (28) pour démarrer le fonctionnement de combustion de l'ensemble de brûleur (28),
b) pendant la phase de démarrage du fonctionnement de chauffage par combustion du réchauffeur d'air hybride (10), faire fonctionner l'unité de chauffage (54),
c) à l'issue de la phase de démarrage du fonctionnement de chauffage par combustion du réchauffeur d'air hybride (10), après un laps de temps prédéterminé suivant le démarrage de l'ensemble de brûleur (28) et/ou de l'unité de chauffage (54), ou lorsque le réchauffeur d'air hybride (10) atteint une température seuil, arrêter le fonctionnement de l'unité de chauffage (54),
et/ou que
le procédé comprend les étapes d) et e) suivantes :
d) si la puissance de chauffage de consigne (HS) est inférieure à une puissance de chauffage de consigne seuil (S) du réchauffeur d'air hybride (10), l'unité de chauffage (54) est mise en service et l'ensemble de brûleur (28) n'est pas mis en service en mode de combustion,
e) si la puissance de chauffage de consigne (HS) dépasse ou est supérieure à la puissance de chauffage de consigne seuil (S) du réchauffeur d'air hybride (10), l'ensemble de brûleur (28) est mis en service en mode combustion.

2. Le procédé selon la revendication 1, **caractérisé en ce que** le ventilateur d'air de combustion (34) comprend une roue d'air de combustion (50) pouvant être entraînée en rotation par un moteur de ventilateur (46), et **en ce que** le ventilateur d'air de chauffage (42) comprend une roue d'air de chauffage (44) pouvant être entraînée en rotation par le moteur de ventilateur (46).

3. Le procédé selon la revendication 2, **caractérisé en ce que** la roue d'air de chauffage (44) et la roue d'air de combustion (50) sont disposées à l'intérieur du boîtier (26) en amont de l'ensemble de brûleur (28) et/ou de l'ensemble d'échangeur de chaleur (36).

4. Le procédé selon l'une quelconque des revendications 1 à 3, **caractérisé en ce que** l'unité de chauffage (54) est disposée en aval de l'ensemble de brûleur (28) et/ou de l'ensemble d'échangeur de chaleur (36).

5. Le procédé selon la revendication 4, **caractérisé en ce que** l'unité de chauffage (54) est disposée, dans la direction d'un l'axe longitudinal du boîtier (L), entre l'ensemble d'échangeur de chaleur (36) et la zone de sortie d'air de chauffage (22).

6. Le procédé selon l'une quelconque des revendications 1 à 5, **caractérisé en ce que** l'unité de chauffage (54) comprend une pluralité d'éléments chauffants PTC (56).

7. Le procédé selon l'une quelconque des revendications 1 à 6, **caractérisé en ce que**, pendant le fonctionnement en mode chauffage par combustion du réchauffeur d'air hybride (10), de l'air chauffé (H) est acheminé à travers la chambre d'écoulement d'air chauffé (58) et/ou de l'air de combustion (V) est acheminé vers l'ensemble de brûleur (28).

8. Le procédé selon l'une quelconque des revendications 1 à 7, **caractérisé en ce que** la phase de démarrage du mode de chauffage par combustion du réchauffeur d'air hybride (10) prend fin lorsque la température atteint un seuil dans la zone de l'ensemble d'échangeur de chaleur (36).

9. Le procédé selon l'une quelconque des revendications 1 à 8, **caractérisé en ce que**, lorsque la puissance de chauffage de consigne (HS) du réchauffeur d'air hybride (10) dépasse la puissance de chauffage de consigne seuil (S), le fonctionnement en chauffage par combustion du réchauffeur d'air hybride (10) est lancé au moyen des étapes a) à c).

10. Le procédé selon l'une quelconque des revendications 1 à 9, **caractérisé en ce que** la puissance de chauffage de consigne seuil (S) se situe dans la plage d'une puissance de chauffage maximale de l'unité de chauffage (54) et/ou **en ce que** la puissance de chauffage de consigne seuil (S) est supérieure ou égale à une puissance de chauffage par combustion minimale du réchauffeur d'air hybride (10) en mode de chauffage par combustion.
